# EUROPÄISCHE PATENTANMELDUNG

(11) **EP 4 563 864 A2**
(43) Veröffentlichungstag der Anmeldung: **04.06.2025**
(21) Anmeldenummer: 24214133.1
(22) Anmeldetag: 20.11.2024
(51) Int. Cl.: F16L 13/14

(54) **FITTING ZUM VERBINDEN MIT EINEM ROHR**

(30) Priorität: 22.11.2023 DE 102023132502
(71) Anmelder: Viega Technology GmbH & Co. KG, 57439 Attendorn (DE)
(72) Erfinder: Hofrichter, Simon, 57399 Kirchhundem (DE); Pace, Mario, 57368 Lennestadt (DE); Köster, Paul, 57462 Olpe (DE)
(74) Vertreter: Cohausz & Florack

(57) **Zusammenfassung**

Die Erfindung betrifft ein Fitting zum Verbinden mit einem Rohr (4), mit einem Grundkörper (6), mit einem in dem Grundkörper (6) umfangseitig ausgebildeten und nach innen vorstehenden Anschlagelement (8), mit einer mit dem Grundkörper (6) verbundenen Presshülse (10), wobei die Presshülse (10) eine nach innen zum aufzunehmenden Rohr (4) hin gerichtete Kammer (12) aufweist, und mit einem in der Kammer (12) angeordneten Dichtelement (18), wobei die Presshülse (10) geeignet ist, zusammen mit dem Dichtelement (18) das zu verbindende Rohr (4) von außen abzudichten, das dadurch gekennzeichnet ist, dass ein Zusatzring (20) in dem Klemmring (14) in axialer Richtung verschiebbar aufgenommen ist, dass der Zusatzring (20) zwischen einer proximalen Position und einer distalen Position verschiebbar ist und dass der Zusatzring (20) zumindest in der distalen Position aus dem distalen Ende der Presshülse (10) teilweise herausragt. Dieses Fitting löst die Aufgabe einer verbesserten Einstecktiefenkontrolle. Die Erfindung betrifft auch ein System aus einem Klemmring (14) für ein Fitting für ein Rohr und aus einem Zusatzring (20).

## Beschreibung

Die Erfindung betrifft einen Fitting zum Verbinden mit einem Rohr mit einem Grundkörper, mit einem in dem Grundkörper umfangseitig ausgebildeten und nach innen vorstehenden Anschlagelement, mit einer mit dem Grundkörper verbundenen Presshülse, wobei die Presshülse eine nach innen zum aufzunehmenden Rohr hin gerichtete Kammer aufweist, und mit einem in der Kammer angeordneten Dichtelement, wobei die Presshülse geeignet ist, zusammen mit dem Dichtelement das zu verbindende Rohr von außen abzudichten.

Der für die vorliegende Erfindung relevante technische Bereich ist die baustellenseitige Installation von Rohrleitungssystemen, bei der allgemein für das Leiten und Führen eines Fluids, also einer Flüssigkeit oder eines Gases ein aus Rohrabschnitten und Fittings bestehendes Rohrleitungssystem installiert wird. Als Fitting wird grundsätzlich ein Verbindungsstück für eine Rohrleitung verstanden, und ein Fitting wird am häufigsten zur Verbindung von zwei oder mehreren Rohrabschnitten eingesetzt. Das Fitting weist dementsprechend bevorzugt zwei oder mehr Pressabschnitte beispielsweise in Form von Presshülsen auf. Zu den häufigsten Fittings zählen gerade Verbindungen, Richtungswechsel in Form von Rohrbögen, Reduzierstücke, Abzweige wie T-Stücke oder Kreuzungen. Unter einem Fitting ist aber auch ein Rohranschluss einer Armatur oder einer sonstigen Komponente zu verstehen. Beispielsweise weisen Thermometer oder Manometer als Armaturen nur einen Anschluss für einen Rohrabschnitt auf. Somit weist das Fitting einer Armatur nur einen Pressabschnitt auf, um ein Rohrabschnitt an der Armatur anzuschließen.

Für das Verbinden der Rohrabschnitte mit den Fittings und sonstigen Komponenten werden Pressverbindungen genutzt, bei denen ein Pressabschnitt eines Fittings bei eingestecktem Rohrabschnitt mittels einer Pressbacke radial nach innen so umgeformt wird, dass eine dauerhafte und dichte, gegebenenfalls sogar unlösbare Verbindung hergestellt wird. Die Fittings können dabei mit einem Dichtungsmittel, beispielsweise mit einem O-Ring, versehen sein, das die Dichtheit der Verbindung gewährleistet, oder auch mittels eines direkten Kontakts der Materialien des Rohrabschnitts und des Fittings, beispielweise metallisch dichtend ausgebildet sein.

Als Presstechnik für ein radiales Umformen des Pressabschnittes kommen vorwiegend radial wirkende Presssysteme als auch Presssysteme in Frage, die ein radial-axiales Verpressen nutzen, wobei während des Pressvorgangs ein Teil des Fittings axial verschoben wird, um dadurch ein radiales Umformen zu bewirken.

Die zuvor allgemein beschriebenen Rohrleitungssysteme dienen insbesondere einem Transport von Trink- oder Heizungswasser, von Gas zum Betrieb einer Heizungsanlage oder von Industriegasen. Grundsätzlich kann jedes fluide Medium in den Rohrleitungen transportiert werden.

Bei Pressfittings wird unterschieden, ob ein Rohr beim Verpressen von außen abgedichtet und fixiert wird oder ob zumindest ein Teil des Fittings, beispielsweise in Form einer Stützhülse von innen das abzudichtende Rohr stabilisiert. Die vorliegende Erfindung betrifft daher Fittings, bei denen das Rohr von außen oder von innen abgedichtet und fixiert wird.

Als Materialien für von außen abzudichtende Rohre werden einerseits feste Werkstoffe, insbesondere metallische Werkstoffe eingesetzt. Als feste Werkstoffe kommen auch feste Kunststoffe in Frage. Als Materialien kommen hierfür in Frage insbesondere Metalle beispielsweise Edelstähle wie ferritische Stähle wie 1.4520, 1.4521, austenitische Stähle wie 1.4404, Duplex-Stähle wie 1.4462, Rotguss, SiBr, Kupfer, aber auch feste Kunststoffe wie beispielsweise vernetztes Polyethylen (PE-X), Polyethylen erhöhter Temperaturbeständigkeit (PE-RT), Polyvenylchlorid (PVC) sowie Polypropylen (PP) bei entsprechenden Wandstärken zum Einsatz. Des Weiteren können Mehrschichtverbundrohre ausreichend starr für eine Abdichtung von außen ausgeführt sein, beispielsweise über eine dickere Aluminium-Lage, ebenso können auch faserverstärkte Rohre eingesetzt werden. Von innen abzudichtende Rohre können aus den gleichen Kunststoffen oder aus Verbund aus Kunststoff und Metallschichten bestehen, jedoch mit einer geringeren Wandstärke ausgebildet sein, so dass die Flexibilität durch die geometrische Ausgestaltung gewährleistet wird.

Die beschriebenen Fittings und deren Komponenten bestehen bevorzugt aus einem Metall, um eine Verformbarkeit bei ausreichender Härte und Formstabilität nach dem Umformen zu gewährleisten. Als Metalle kommen die für die starren Rohre bereits genannten Metalle in Frage, beispielsweise Edelstähle wie ferritische Stähle wie 1.4520, 1.4521, austenitische Stähle wie 1.4404, Duplex-Stähle wie 1.4462, Rotguss, SiBr, Kupfer.

Die beschriebenen Fittings und deren Komponenten können jedoch auch aus einem nicht-metallischen Werkstoff bzw. Kunststoff bestehen, wenn der nicht-metallische Werkstoff ausreichende Eigenschaften für ein Verpressen und dauerhaftes Verbinden mit Rohren ermöglicht. Als Werkstoffe kommen hier beispielsweise die folgenden Stoffe in Frage: vernetztes Polyethylen (PE-X), Silan-vernetztes Polyethylen (PE-Xb) oder physikalisch vernetztes Polyethylen (PE-Xc), Polyethylen erhöhter Temperaturbeständigkeit (PE-RT), Polyvenylchlorid (PVC), Polypropylen (PP) bei entsprechenden Wandstärken, Polyphenylsulfon (PPSU), Polyetheretherketon (PEEK) oder Polyaryletherketon (PAEK), aliphatisches biobasiertes Polyamid (PA410, PA12, PA12-GF30) oder Polypropylen-Random-Copolymer mit modifizierter Kristallstruktur und erhöhter Temperaturbeständigkeit (PP-RCT).

Fittings zum Verbinden mit einem von außen abzudichtenden Rohr können verschiedene Ausgestaltungen aufweisen. In der Regel ist ein Dichtungsring, beispielsweise ein O-Ring, zum Abdichten des Fittings gegenüber der Rohraußenseite vorgesehen. Des Weiteren sind Klemmringe, Halteelemente und/oder Fixierelemente vorgesehen, die vor und nach dem Verpressen das Rohr in der erforderlichen Position relativ zum Fitting fixieren.

Der Grundkörper des Klemmrings ist aus einem Kunststoff hergestellt und weist eine geschlossene Ringform auf. Um den Klemmring in ein Fitting bzw. in die hinterschnittene Kammer der Presshülse einzusetzen, muss dieser radial zusammengedrückt werden, wozu axial verlaufende Schlitze vorgesehen sein können, die das Zusammendrücken erleichtern. Der Klemmring kann auch als Streifen ausgebildet sein, der vor dem Einsetzen in das Fitting in eine gebogene bzw. runde Form gebracht wird.

Insbesondere die zuvor beschriebenen Fittings für ein außen abdichtendes Verbinden mit einem Rohr haben den Nachteil, dass eine Kontrolle der Einstecktiefe eines einzuschiebenden Rohres nur schwer möglich ist. Für eine zuverlässige verpresste Verbindung ist es aber erforderlich, dass sich ein Abschnitt des eingeschobenen Rohres in Richtung in das Fitting hinein über die Position des Dichtelements hinaus ausreichend tief eingesteckt ist. Da dieser Bereich durch die Presshülse nach außen abgedichtet ist, kann kein Sichtfenster in die Presshülse eingebracht werden, um die Einstecktiefe zu kontrollieren.

Bei Fittings für ein innen abdichtendes Verbinden können in die Presshülse sogenannte Sichtfenster eingebracht werden, die einen Blick auf das eingeschobene Rohr und somit eine Einstecktiefenkontrolle ermöglichen.

Grundsätzlich ist es im Stand der Technik üblich, vor dem Einführen des Rohres in das Fitting eine Markierung auf der Außenseite des Rohrendes anzubringen, in der Regel durch Anzeichnen mit einem Stift. Diese Vorgehensweise ist aufwändig und fehleranfällig.

Daher liegt der vorliegenden Erfindung die Aufgabe zugrunde, die Einstecktiefenkontrolle bei einem Fitting zu verbessern.

Die zuvor aufgeführte Aufgabe wird erfindungsgemäß durch ein Fitting mit einem Rohr mit einem Grundkörper, mit einem in dem Grundkörper umfangseitig ausgebildeten und nach innen vorstehenden Anschlagelement, mit einer mit dem Grundkörper verbundenen Presshülse, mit einem Dichtelement, wobei die Presshülse geeignet ist, zusammen mit dem Dichtelement das zu verbindende Rohr abzudichten, dadurch gelöst, dass ein Zusatzring in der Presshülse in axialer Richtung verschiebbar aufgenommen ist, dass der Zusatzring zwischen einer proximalen Position und einer distalen Position verschiebbar ist und dass der Zusatzring zumindest in der distalen Position aus dem distalen Ende der Presshülse teilweise herausragt.

Die distale Richtung ist vom Grundkörper aus betrachtet nach außen gerichtet, während die proximale Richtung in das Fitting hinein gerichtet ist.

Der Grundkörper und Presshülse sind bevorzugt integral ausgebildet oder zweiteilig ausgebildet, wobei der Grundkörper und die Presshülse miteinander verbunden sind.

Das Dichtelement ist bevorzugt angrenzend an das Anschlagelement und somit möglichst tief in Einsteckrichtung des Rohres angeordnet. Dadurch werden Toträume zwischen dem eingesteckten Rohr und der Presshülse im verpressten Zustand vermieden. Das Dichtelement besteht vorzugsweise aus einem elastomeren Werkstoff.

Die Funktion des Zusatzring ist vor allem, eine Einstecktiefenkontrolle zu ermöglichen, wie nachfolgend beschrieben wird.

Das Fitting dient einer Verbindung mit einem von außen abzudichtenden Rohr, das für eine Vorbereitung der Montage durch radiales Verpressen in das Fitting bzw. das offene distale Ende der Presshülse eingeschoben wird. Dieser Vorgang ist für den Anwender haptisch überprüfbar, da das Rohr am Ende des Einschiebens am Anschlagelement anschlägt und somit einen hohen Widerstand gegen die hineindrückende Kraft erzeugt.

Der Zusatzring liegt währenddessen umfangseitig zumindest abschnittsweise an der Außenseite des Rohres an. Dabei entsteht eine Haftreibungskraft und der Zusatzring und das Rohr bewegen sich abschnittsweise zusammen.

Nachdem das Rohr bis zu seiner Sollposition, also bis zum Anschlagelement eingeschoben worden ist, befinden sich das Dichtelement und die Presshülse in einer Anordnung zum Rohr, in der ein Verpressen der Presshülse mit einem Presswerkzeug zu einer sicheren und dichten Verbindung zwischen Fitting und Rohr führt. Insbesondere bewirkt das Dichtelement durch ein Verpressen zwischen der Außenseite des Rohres und der Innenseite der Presshülse ein Abdichten. Wäre das Rohr nicht in Anlage mit dem Dichtelement, so käme es zu einer unvollständigen und fehlerhaften Verbindung. Wenn das Rohr zwar am Dichtelement anliegt, aber gleichwohl ein Stück wieder herausgezogen, dann wäre die verpresste Verbindung nicht mehr so mechanisch stabil, wie es bei einer richtigen Positionierung der Fall wäre.

Während des Einschiebens des Rohres wird der Zusatzring in seine proximale Position verschoben, also in eine Position, die maximal weit axial nach innen in das Fitting hinein angeordnet ist. Durch das Anliegen des Rohres am Anschlagelement erhält Anwender eine haptische Rückkopplung, dass das Rohr genügend weit eingeschoben worden ist. In dieser Position ragt der Zusatzring nur zu einem Teil, geringfügig, beispielsweise als farblich markierter herausstehender Bund, heraus oder ist vollständig von dem distalen Ende der Presshülse aufgenommen. Durch diese Anordnung wird dem Anwender des Fittings ein Hinweis gegeben, dass das Rohr richtig positioniert ist.

Wird das Rohr nach dem Einschieben und vor dem Verpressen wieder teilweise aus dem Rohr herausgezogen, so bewegt sich aufgrund der Haftreibung auch der Zusatzring axial aus dem Fitting heraus. Dadurch tritt ein immer größer werdender Teil des Zusatzrings aus dem distalen Ende der Presshülse hervor und ist für den Anwender sichtbar. Die Sichtbarkeit kann durch eine warnende Farbgebung oder eine andere Markierung verstärkt werden.

Der Anwender erkennt also anhand der Position des Zusatzrings relativ zur Presshülse, ob das Rohr richtig für ein Verpressen positioniert ist oder nicht.

Der Zusatzring weist somit bevorzugt mindestens eine Markierung zur Positionsanzeige relativ zur Presshülse auf. Die Markierung kann dabei einfarbig, mehrfarbig oder strukturiert ausgebildet sein.

Ein geringfügiges Herausziehen des Rohres kann möglicher Weise nicht schädlich für eine verpresste Verbindung sein, da das Dichtelement weiterhin mit der Außenseite des Rohres in Verbindung steht und das Rohr ausreichend weit im Grundkörper des Fittings angeordnet ist.. Die Markierung kann daher so ausgebildet sein, dass der Anwender ein geringes, aber unschädliches Abweichen von der Sollposition erkennen kann.

Durch ein weiteres Herausziehen des Rohres kann der Zusatzring weiter in Richtung der distalen Position bis zu einem Anschlagen in der distalen Position gebracht werden. Der Zusatzring verbleibt dann in der distalen Position, auch wenn das Rohr weiter herausgezogen wird. Jedenfalls ist das Rohr nicht mehr richtig für ein Verpressen positioniert.

In bevorzugter Weise weist das Fitting einen relativ großen Abstand zwischen dem Anschlagelement und dem Dichtelement auf. Daher wird das Rohr nach dem Einschieben und nach dem Verpressen innerhalb des Fittings und proximal von dem Dichtelement durch den Grundkörper und ggf. durch einen Teil der Presshülse geführt bzw. gehalten. Dadurch wird die Biegefestigkeit und die Auszugsfestigkeit der verpressten Verbindung gewährleistet. Bereits bei kleinen Veränderungen der Positionierung des Rohres innerhalb des Fittings, also bei einem nur geringen Herausziehen des Rohres aus der proximalen Position in distaler Richtung kann es jedoch zu einer Verschlechterung der verpressten Verbindung kommen. In diesem Fall zeigt der Zusatzring eine nicht optimale Positionierung des Rohres vor dem Verpressen an.

In dieser Ausgestaltung ist der Abstand zwischen der proximalen Position und der distalen Position geringer als der Abstand zwischen dem Anschlagelement und dem Dichtelement.

Für das Erzeugen der Haftreibung zwischen dem Zusatzring und dem Rohr ist es bevorzugt, dass der Zusatzring mindestens einen radial nach innen vorstehenden Haltevorsprünge zur Anlage an einem einzuschiebenden Rohr aufweist. Somit kommen nur der mindestens eine Haltevorsprung mit der Oberfläche des Rohres in Berührung, so dass der Zusatzring darüber hinaus nicht am Rohr anliegt. Durch eine an den Außendurchmesser angepasste Dimensionierung des mindestens einen Haltevorsprungs kann eine ausreichende Haftreibung für die Funktion des Zusatzrings erreicht werden. Der mindestens eine Haltevorsprung kann als weitgehend durchgehender Ring ausgebildet sein, es können aber auch mindestens zwei Haltevorsprünge umfangseitig verteilt angeordnet sein.

Der Zusatzring weist dazu in weiter bevorzugter Weise radial nach außen oder in azimutaler Richtung vorstehende Anschlagelemente auf. Diese Anschlagelemente können mit der Presshülse oder - wie nachfolgend erläutert wird - mit einem Klemmring wechselwirken, um die Bewegung des Zusatzrings zwischen der proximalen und der distalen Position zu begrenzen.

Der Zusatzring ist somit in der Presshülse und vorzugsweise in der darin ausgebildeten Kammer verschiebbar aufgenommen. Beispielsweise kann der Zusatzring lose verschiebbar in der Presshülse aufgenommen sein, wobei die proximale Position und die distale Position durch entsprechende Anschläge an der Presshülse definiert werden können.

Bei einer bevorzugten Ausgestaltung des Fittings weist die Presshülse eine nach innen zum aufzunehmenden Rohr hin gerichtete Kammer auf und das Dichtelement ist in der Kammer angeordnet. Zudem weist das Fitting neben dem Zusatzring auch einen in der Presshülse angeordneten Klemmring auf. Der Zusatzring steht in Eingriff mit dem Klemmring und der Klemmring führt bei einer axialen Bewegung den Zusatzring. Dabei sind Anschläge für eine Begrenzung der Bewegung zwischen der proximalen Position und der distalen Position des Zusatzrings relativ zum Klemmring vorgesehen.

Wenn der Zusatzring in dem Klemmring geführt wird, kann der Klemmring umfangseitig verteilt angeordnete und axial verlaufende Ausnehmungen zur verschiebbaren Aufnahme der Anschlagelemente des Zusatzrings aufweisen. Die Anschlagelemente und die Ausnehmungen realisieren somit eine Führung des Zusatzrings über einen begrenzten Bewegungsbereich.

Weiter bevorzugt sind die Anschlagelemente an sich axial erstreckenden Laschen ausgebildet, wobei die Laschen mit einem Ring verbunden sind. Der Ring ist im Bereich der distalen Öffnung der Presshülse angeordnet und die Laschen erstrecken sich axial in die Presshülse hinein. Die Laschen sind dabei elastisch nach innen verbiegbar, so dass der Zusatzring leicht in der Presshülse und innerhalb des Klemmrings montiert werden kann.

Alternativ zu der oben beschriebenen Dimensionierung des Fittings kann der Abstand zwischen der proximalen Position und der distalen Position größer als der axiale Abstand zwischen dem Anschlagelement und dem Dichtelement sein. Der axiale Abstand zwischen dem Anschlagelement und dem Dichtelement wird zwischen dem dem Dichtelement zugewandten Ende des Anschlagelements und der in distaler Richtung betrachtet äußeren Ende der Dichtfläche bestimmt. Durch diesen Abstand kann der Zusatzring in seiner distalen Position sicher anzeigen, dass das Rohr nicht in einer für ein Verpressen geeigneten Position relativ zum Fitting positioniert ist. In dieser Position ist es bevorzugt, eine deutliche Signalwirkung durch die Markierung beispielsweise durch die Farbe rot zu erzielen.

Die Funktion des Klemmrings innerhalb der Kammer der Presshülse kann dadurch verbessert werden, dass ein in der Kammer angeordnetes und zumindest teilweise entgegen der Auszugsrichtung des einzuschiebenden Rohres ausgerichtetes Fixierelement vorgesehen ist. Das Fixierelement kann ringförmig mit radial nach innen und/oder nach außen vorstehenden Schneidelementen ausgebildet sein oder das Fixierelement weist eine Mehrzahl einzelnen Schneidelementen auf, wobei der Klemmring die Schneidelemente zumindest teilweise umgibt und positioniert.

Der Klemmring ist bevorzugt aus einem der oben genannten Kunststoffe hergestellt und weist Klemmvorsprünge zur Anlage und Fixierung eines eingeschobenen Rohres auf. Dadurch kann der Klemmring das eingeschobene Rohr in seiner Position halten, bevor das Fitting mittels eines Presswerkzeugs verpresst wird.

Alternativ zu der Anordnung des Dichtelements in einer von der Presshülse gebildeten Kammer kann das Fitting auch für eine innen abdichtende Verbindung mit einem Rohr ausgebildet sein. In diesem Fall greift eine mit dem Grundkörper des Fittings ausgebildete Stützhülse in das Rohrende hinein. Die Stützhülse weist an der Außenseite eine Dichtelement auf, das beim Aufpressen des Rohres auf den Stützkörper die Abdichtung bewirkt. Die beschriebene Funktionalität des Zusatzrings ohne und mit einem Klemmring kann dann in gleicher Weise wir zuvor beschrieben ausgebildet sein.

Die oben aufgezeigte Aufgabe wird erfindungsgemäß auch durch ein System aus einem Klemmring für ein Fitting für ein Rohr und aus einem Zusatzring gelöst, wobei der Klemmring umfangseitig verteilt angeordnete und axial verlaufende Ausnehmungen zur verschiebbaren Aufnahme der Anschlagelemente aufweist. wobei der Zusatzring radial nach außen vorstehende Anschlagelemente aufweist, wobei der Zusatzring in dem Klemmring in axialer Richtung verschiebbar aufgenommen ist, wobei der Zusatzring zwischen einer proximalen Position und einer distalen Position verschiebbar ist und wobei der Zusatzring zumindest in der distalen Position aus dem distalen Ende der Presshülse teilweise herausragt.

Die Vorteile und Ausgestaltungen des Klemmrings und des Zusatzrings sind zuvor im Detail erläutert worden. Auf diese Beschreibung wird hier Bezug genommen.

Im Folgenden wird die Erfindung anhand von Ausführungsbeispielen mit Bezug auf die Zeichnung erläutert. In der Zeichnung zeigen
- Fig. 1: ein erstes Ausführungsbeispiel eines Fittings mit einem Zusatzring ohne Rohr,
- Fig. 2: das Fitting nach Fig. 1 mit eingesetzten Rohren,
- Fig. 3: eine perspektivische Darstellung des Fittings mit einem vorstehenden Zusatzring,
- Fig. 4: das Fitting mit eingesteckten Rohren in einer Seitenansicht mit Zusatzringen in zwei verschiedenen Positionen,
- Fig. 5 bis 7: einen Zusatzring in verschiedenen Ansichten,
- Fig. 8 bis 10: einen Klemmring in verschiedenen Ansichten,
- Fig. 11: ein zweites Ausführungsbeispiel eines Fitting mit einem Zusatzring und mit eingesetzten Rohren und
- Fig. 12 und 13: ein zweites Ausführungsbeispiel eines Fittings mit einem Zusatzring und mit eingesetzten Rohren.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

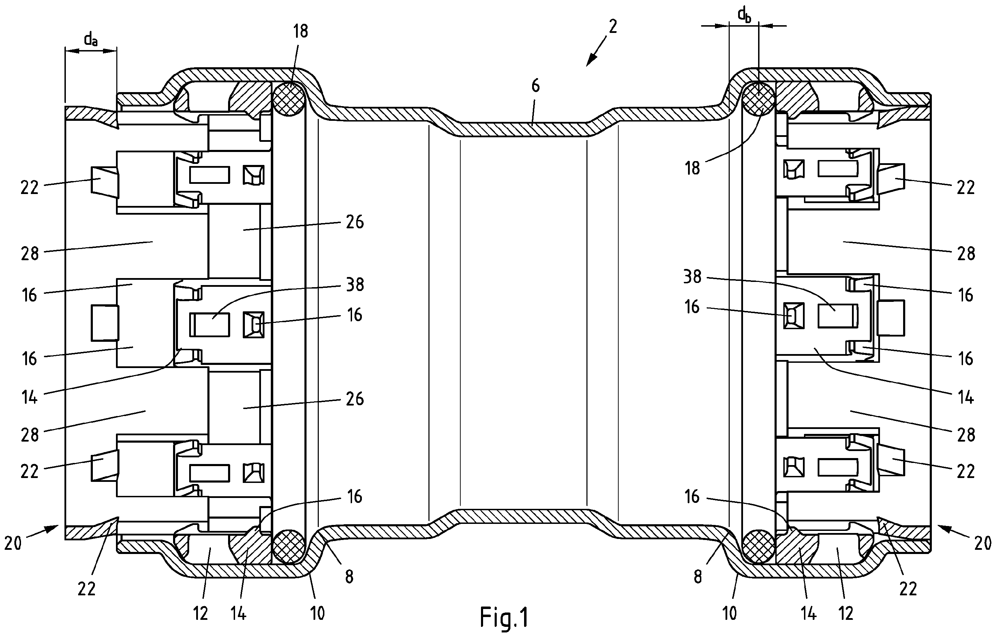

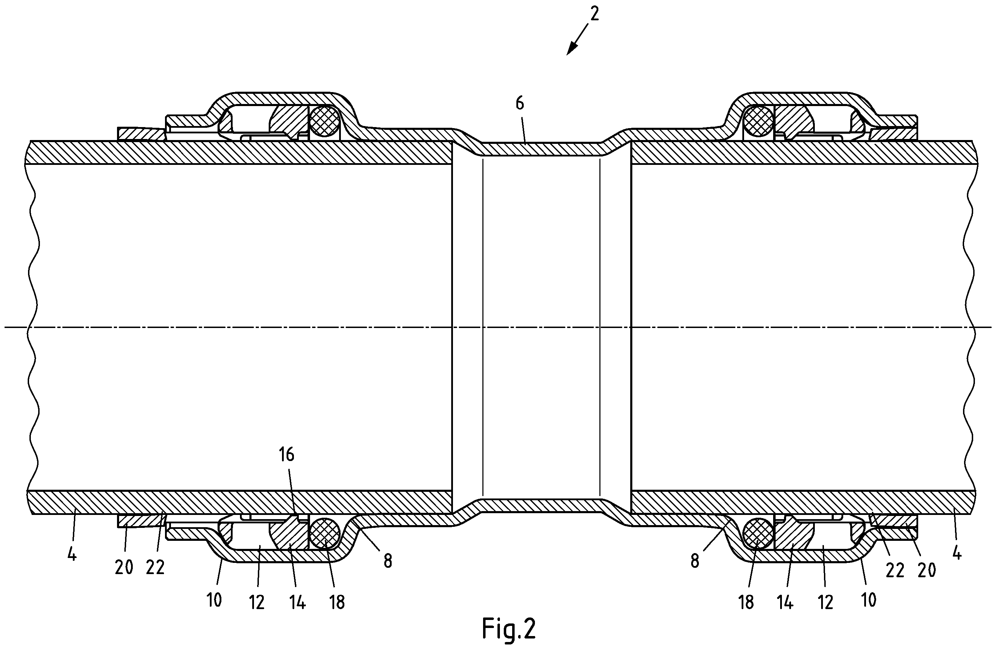

Fig. 1 und 2 zeigen ein erstes Ausführungsbeispiel eines Fitting 2 zum Verbinden mit einem Rohr 4, wobei Fig. 1 das Fitting 2 ohne Rohr und Fig. 2 das Fitting mit Rohr zeigt.

Das Fitting 2 weist einen Grundkörper 6 auf mit einem umfangseitig ausgebildeten und nach innen vorstehenden Anschlagelement 8. Das Anschlagelement 8 dient einem Anschlag für ein einzuschiebendes Rohr 4, um das Rohr 4 in einer für ein Verpressen optimalen Position anordnen zu können. Ein Anwender des Fittings 2 merkt beim Einschieben den mechanischen Widerstand und erkennt damit das Erreichen der optimalen Einsteckposition.

Mit dem Grundkörper 6 ist Presshülse 10 mit einer nach innen zum aufzunehmenden Rohr 4 hin gerichteten Kammer 12 verbunden. Vorliegend ist die Presshülse 12 integral mit dem Grundkörper 6 ausgebildet.

In der Kammer 12 ist ein Klemmring 14 angeordnet, der aus einem Kunststoff hergestellt ist und Klemmvorsprünge 16 zur Anlage und Fixierung eines eingeschobenen Rohres 4 aufweist. Die Klemmvorsprünge 16 weisen radial nach innen und bilden einen Innendurchmesser, der kleiner als der Außendurchmesser des Rohres 4 ist. Die Klemmvorsprünge 16 bzw. der Klemmring 14 sind aus einem elastischen Material, so dass sich bei Einschieben des Rohrs 4 in das Fitting 2 die Klemmvorsprünge 16 leicht nach außen verbogen werden und somit in feste Anlage an dem Rohr 4 gelangen. Dadurch wird das Rohr 4 vor dem Verpressen des Fittings 2 sicher gehalten und nach dem Verpressen wird das Rohr 4 innerhalb der Kammer fixiert gehalten.

In der Kammer 12 ist weiterhin ein Dichtelement 18 angeordnet, das bevorzugt als O-Ring aus einem elastomeren Werkstoff besteht. Gemäß Fig. 1 ist das Dichtelement 18 angrenzend an das Anschlagelement 8 angeordnet. Dadurch ergeben sich nur geringe Toträume innerhalb der Anordnung aus Fitting 2 und Rohr 4.

Die in Fig. 2 dargestellte Presshülse 10 ist geeignet, zusammen mit dem Klemmring 14 und dem Dichtelement 18 das zu verbindende Rohr 4 von außen abzudichten. Dazu wird die Presshülse 10 durch ein nicht dargestelltes Presswerkzeug radial nach innen verpresst und dauerhaft umgeformt. Durch den Anpressdruck der Presshülse 10 werden der Klemmring 14 und das Dichtelement 18 an die Außenseite des Rohres 4 gepresst und das Rohr 4 wird abdichtend fixiert.

Für die Verbesserung der Einstecktiefenkontrolle weist das Fitting 2 einen Zusatzring 20 auf, der in dem Klemmring 14 in axialer Richtung verschiebbar aufgenommen ist. Der Zusatzring 20 kann also axial relativ zum Klemmring 14 und somit relativ zur Presshülse 10 axial verschoben werden, ohne dass die Halte- und Fixierfunktion des Klemmrings 14 beeinflusst wird.

Der Zusatzring 20 ist zwischen einer in Fig. 1 und 2 links dargestellten proximalen Position und einer in Fig. 1 und 2 rechts dargestellten distalen Position verschiebbar. In der proximalen Position ist der Zusatzring 20 axial nach innen in den Grundkörper 6 hinein verschoben und wird in der Presshülse 10 vollständig aufgenommen. In der distalen Position ragt der Zusatzring 20 aus dem distalen Ende der Presshülse 10 teilweise heraus.

Fig. 2 zeigt das Fitting 2 mit eingeschobenen Rohr 4. Das Rohr 4 liegt mit seiner Außenseite an dem Zusatzring 20 an und verschiebt den Zusatzring 20 durch Haftreibung bei einer axialen Bewegung. Insbesondere bei der Installation des Rohres 4 wird der Zusatzring 20 in die proximale Position verschoben, wie in Fig. 2 rechts dargestellt ist. Das Rohr 4 liegt in dieser Position an dem Anschlagelement 8 an und der Klemmring 14 und das Dichtelement 18 liegen an der Außenseite des Rohres 4 an. Diese Position des Rohres 4 ist die Sollposition, in der das Rohr 4 durch radiales Verpressen der Presshülse 10 fest und abdichtend mit dem Fitting 2 verbunden werden kann.

Die korrekte Position wird dem Anwender beim Einschieben durch den mechanischen Widerstand durch die Anlage des Rohres 4 an dem Anschlagelement 8 signalisiert.

Bei der weiteren Montage kann es passieren, dass das Rohr 4 wieder teilweise aus dem Fitting herausgezogen wird. In dem dargestellten Zustand liegt das Dichtelemente 18 weiterhin an der Oberfläche des Rohres 4 an und würde bei einem Verpressen des Fittings zu einer abdichtenden Verbindung führen. Jedoch ist bei dieser Anordnung des Rohres 4 innerhalb des Fittings 2 die verpresste Verbindung weniger stabil, da durch die kürzere Führung des Rohres 4 innerhalb des Fittings 2 die Biegefestigkeit und die Auszugsfestigkeit verringert.

Beim Herausziehen verschiebt das Rohr 4 den Zusatzring 20 durch den Kontakt mittels Haftreibung axial nach außen. Der Zusatzring 20 wird dadurch teilweise sichtbar und kann als Signal vom Anwender wahrgenommen werden. Dieser Zustand ist beispielhaft in Fig. 2 links dargestellt. Ist der Zusatzring 20 also außen sichtbar, so kann der Anwender erkennen, dass die aktuelle Position des Rohres 4 innerhalb des Fittings nicht korrekt ist.

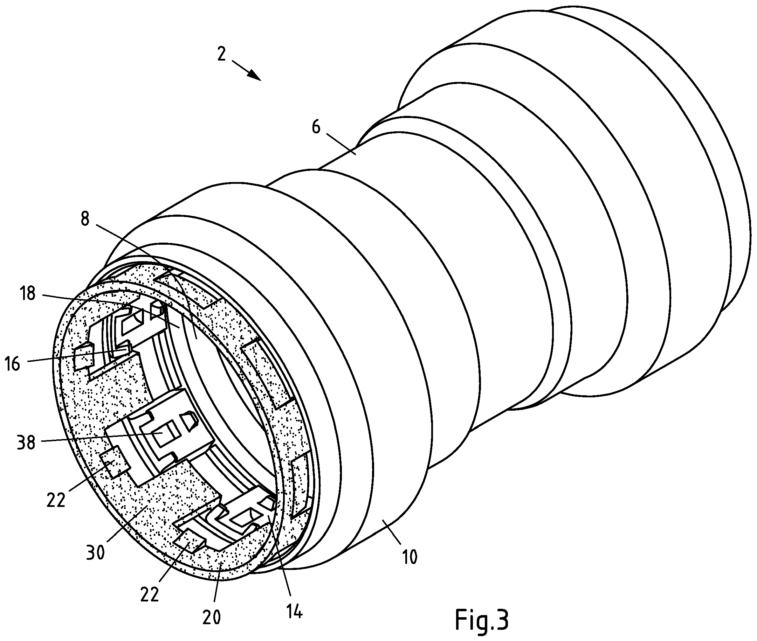

Fig. 3 zeigt das zuvor beschriebene Fitting 2 mit dem Zusatzring 20, der nach außen aus der Presshülse 10 heraus in die distale Position verschoben ist. Dadurch steht der Zusatzring 20 vor und kann die Signalwirkung entfalten. Dazu weist der Zusatzring 20 als Markierung eine andere Farbe (grau) als die Farbe des Grundkörpers 6 (weiß) auf.

Als Markierung können auch ein Farbverlauf, gestufte Farbabschnitte oder auch eine Oberflächenstrukturierung zur Positionsanzeige relativ zur Presshülse 10 vorgesehen sein.

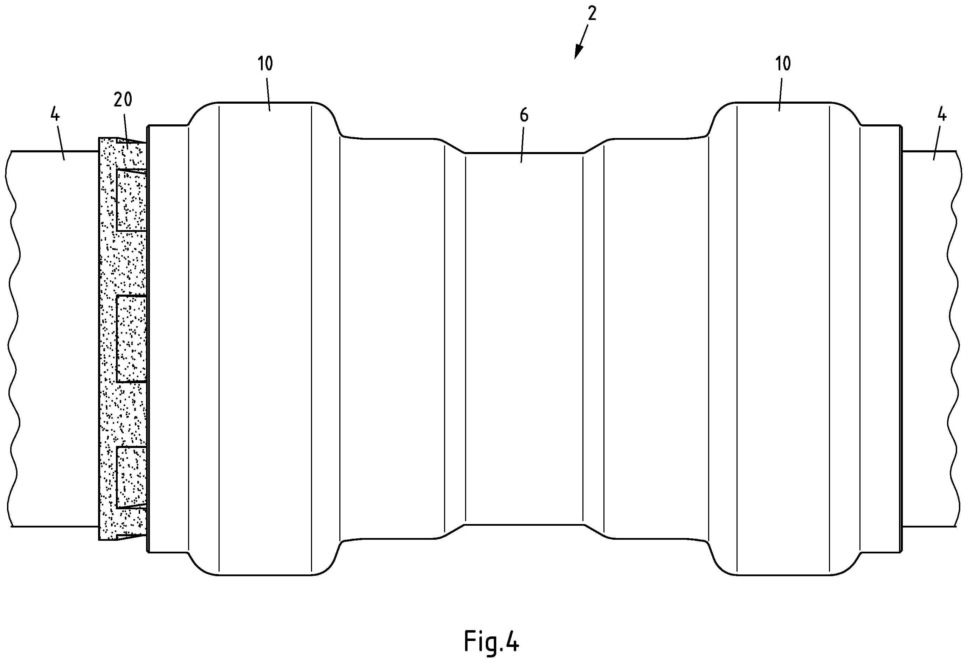

Fig. 4 zeigt eine Seitenansicht des Fittings 2 mit grau dargestelltem Grundkörper 6 und mit eingesteckten Rohren 4. Auf der rechten Seite ist das ebenfalls grau dargestellte Rohr 4 bis zum Anschlagelement 8 eingesteckt. Der zugeordnete Zusatzring 20 ist von außen nicht zu erkennen. Auf der linken Seite des Fittings 2 ist das nach einem Einschieben bis zum Anschlag an das Anschlagelement 8 wieder ein Stück weit herausgezogen worden und befindet sich nicht mehr in der korrekten Position für ein ordnungsgemäßes Verpressen. Durch die Haftreibung zwischen dem Rohr 4 und dem Zusatzring 20 ist der Zusatzring 20 in die distale Position verschoben worden und ist deutlich als graues Bauteil gegenüber dem weiß dargestellten Grundkörper 6 und dem weiß dargestellten Rohr 4 sichtbar angeordnet. Der Anwender kann also die Kontrolle der Einstecktiefe anhand der Sichtbarkeit des Zusatzrings 20 durchführen.

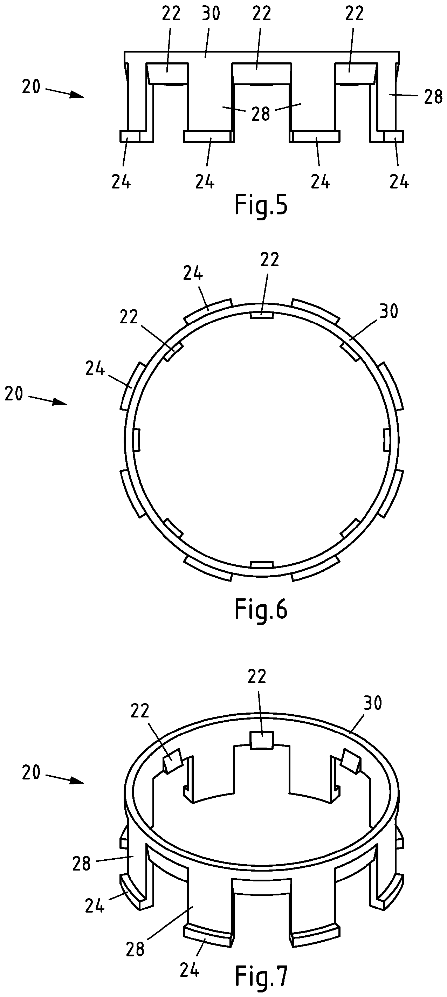

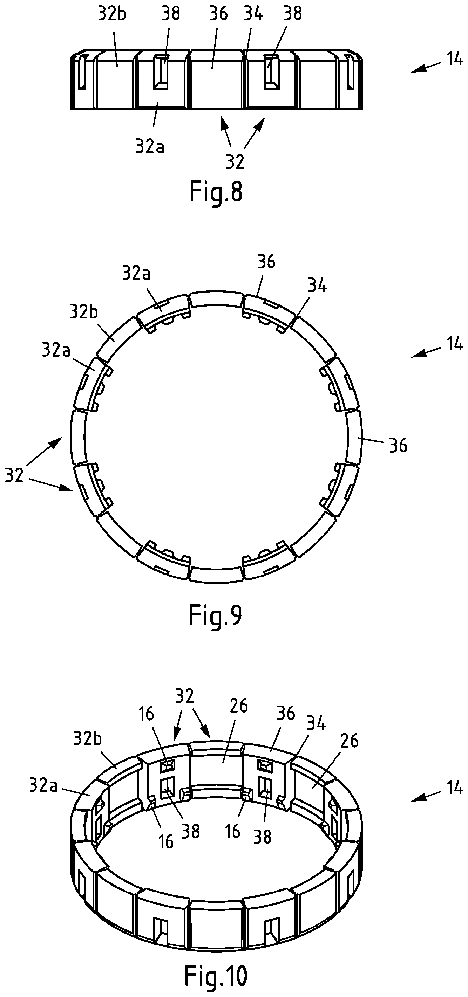

Die Fig. 5 bis 7 zeigen den Zusatzring 20 in verschiedenen Ansichten und die Fig. 8 bis 10 zeigen den Klemmring 14 ebenfalls in verschiedenen Ansichten. Der Zusatzring 20 und der Klemmring 14 sind aufeinander angepasst, um die Funktion der Einstecktiefenkontrolle zu realisieren.

Der Zusatzring 20 weist zunächst mehrere radial nach innen vorstehende Haltevorsprünge 22 zur Anlage an einem einzuschiebenden Rohr 4 auf. Der Innendurchmesser an den Innenseiten der Haltevorsprünge ist dabei geringfügig geringer als der Außendurchmesser des einzuschiebenden Rohres 4. Somit kommen die Haltevorsprünge 22 in ausreichend starken Kontakt, um die Mitnahme durch das Rohr 4 durch Haftreibung zu realisieren.

Weiterhin weist der Zusatzring 20 radial nach außen vorstehende Anschlagelemente 24 auf und der Klemmring 14 weist umfangseitig verteilt angeordnete und axial verlaufende Ausnehmungen 26 zur verschiebbaren Aufnahme der Anschlagelemente 24 auf. Das Zusammenwirken wird insbesondere in Fig. 1 deutlich. Die Ausnehmungen 26 nehmen die Anschlagelemente 24 in axialer Richtung verschiebbar auf, wobei die Länge der Ausnehmungen 26 den Bewegungsspielraum und die proximale Position und die distale Position vorgeben.

Die Anschlagelemente 24 sind weiterhin an sich axial erstreckenden Laschen 28 ausgebildet und die Laschen 28 sind mit einem Ring 30 verbunden.

Der in den Fig. 8 bis 10 dargestellte Klemmring 14 weist eine Mehrzahl von Ringelementen 32 auf, die jeweils mit Scharnierelementen 34 verschwenkbar miteinander verbunden sind. Die Ringelemente 32 dienen einem Halten und einem Fixieren eines einzusteckenden Rohres 4.

Weiterhin weisen die Ringelemente 32 mittels der Scharnierelemente 34 eine Streifenform auf. Die Ringelemente 32 können daher zum einen eine flache Form annehmen, wobei "flach" im Wesentlichen bedeutet, dass die Ringelemente 32 auf einer Fläche aufliegen können.

Zum anderen können die Ringelemente 32 mittels der Scharnierelemente 34 auch eine seitlich offene Ringform wie in Fig. 8 bis 10 gezeigt annehmen. Der Klemmring 14 weist somit in der Ringform eine einseitig offene C-Form auf.

Während der Herstellung des Klemmrings 14 als Endlosprodukt, beispielsweise als Produkt eines Kunststoffextrusionsverfahrens, hat die flache Anordnung den Vorteil, dass die Ringelemente 32 in einfacher Weise mit weiteren Elementen bestückt werden können, ohne dass eine Ringform zu aufwändigen Verfahrensschritten führt.

Wie sich aus den Fig. 8 bis 10 ergibt, weisen die Ringelemente 32 eine teilzylindrische Außenfläche 36 auf, die an die zylindrische Formen des Fittings bzw. der Kammer der zugeordneten Presshülse angepasst ist. Dadurch kann der Klemmring 14 zumindest abschnittsweise flächig an der Innenseite der Presshülse 10 anliegen. In der flachen Form des Klemmrings 14 liegen die teilzylindrischen Außenflächen dann abschnittsweise auf einem Untergrund auf.

Die dargestellte streifenförmige Ausbildung ist bei dem Ausführungsbeispiel gewählt worden. In gleicher Weise kann der Klemmring 14 auch als geschlossener Ring ausgebildet sein und abwechselnd Ringelemente 32 mit unterschiedlichen Funktionen aufweisen.

Ein Teil 32a der Ringelemente 32 ist mit den oben bereits beschriebenen Klemmvorsprüngen 16 ausgebildet, die beim Einstecken des Rohres 4 an der Außenseite des Rohres 4 anliegen und eine Führungsfunktion übernehmen. Im eingesteckten Zustand halten die Klemmvorsprünge dann das Rohr 4 und fixieren dieses vor dem Verpressen.

Die Klemmfunktion des Klemmrings 14 kann durch ein in der Kammer 10 angeordnetes und zumindest teilweise entgegen der Auszugsrichtung des einzuschiebenden Rohres 4 ausgerichtetes Fixierelement verbessert werden. Grundsätzlich kann das Fixierelement ringförmig mit radial vorstehenden Schneidelementen ausgebildet sein. Bei dem vorliegenden Ausführungsbeispiel weist das Fixierelement eine Mehrzahl Schneidelementen auf und der Klemmring 14 nimmt die Schneidelemente in entsprechend ausgebildeten Öffnungen 38 auf. Die Schneidelemente selbst sind in den Figuren nicht dargestellt.

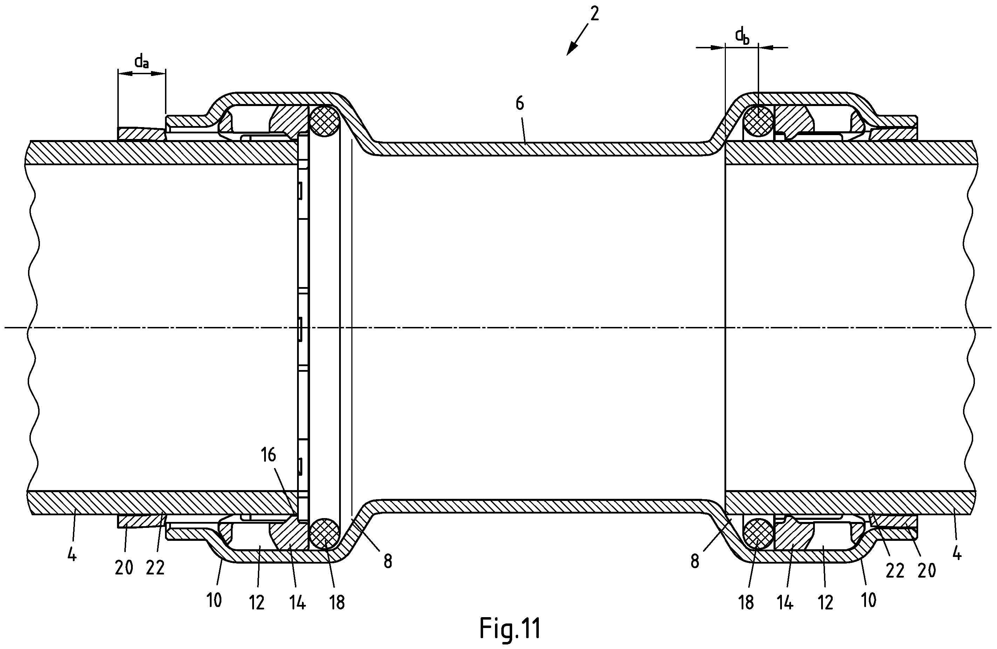

Fig. 11 zeigt ein weiteres Ausführungsbeispiel des Fittings 2, bei dem im Vergleich zu den Fig. 1 bis 4 der Abstand zwischen dem Anschlagelement 8 und dem Dichtelement 18 verringert ist.

Der Abstand dₐ zwischen der proximalen Position und der distalen Position ist größer als der axiale Abstand d_{b} zwischen dem Anschlagelement 8 und dem Dichtelement 18. Damit ist gewährleistet, dass sich der Zusatzring 20 genügend weit verschieben lässt, um eine nicht mehr zuverlässige Positionierung des Rohres 4 in der Presshülse 10 anzeigen zu können, in der das Dichtelement 18 nicht mehr an dem Rohr 4 anliegt.

Wegen der relativ zu der anderen Ausführungsform nach den Fig. 1 bis 4 geringen Einstecktiefe weist die Ausführungsform nach den Fig. 11 im verpressten Zustand nur eine geringe Biegefestigkeit und Auszugsfestigkeit auf. Vorteilhaft ist aber, dass mittels des Zusatzrings eine unsichere Position angezeigt werden kann, in der ein Verpressen nicht zu einer dichten Verbindung führt. Denn das Dichtelement 18 kommt in dieser Positionierung beim Verpressen nicht in eine abdichtende Anlage mit dem Rohr 4.

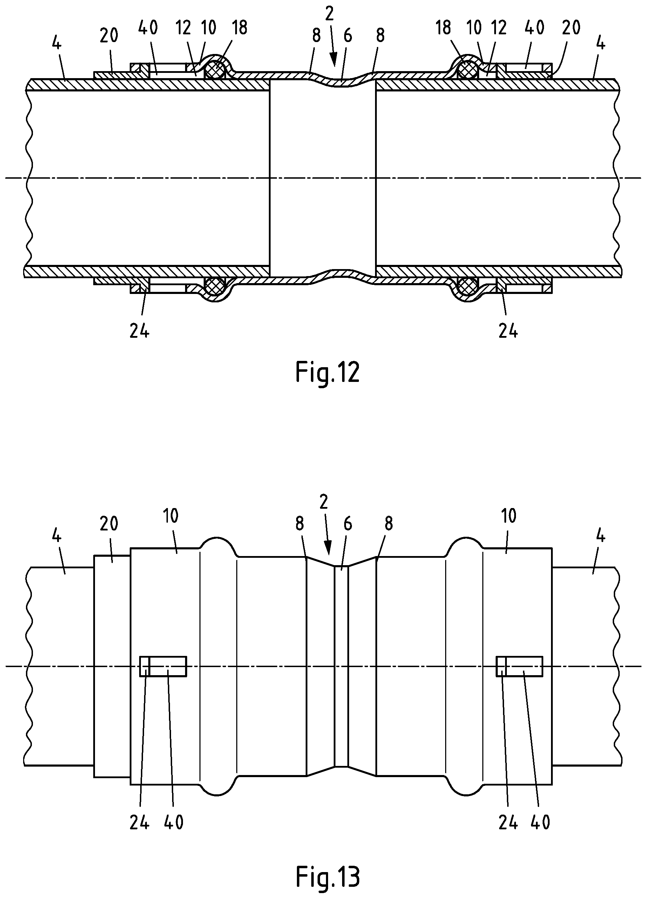

Fig. 12 und 13 zeigen ein zweites Ausführungsbeispiel eines Fittings 2 zum Verbinden mit zwei Rohren 4. Das Fitting 2 weist einen Grundkörper 6, einen in dem Grundkörper 6 umfangseitig ausgebildeten und nach innen vorstehenden Anschlagelement 8 und eine mit dem Grundkörper 6 verbundene Presshülse 10 auf. Die Presshülse 10 weist weiterhin eine nach innen zum aufzunehmenden Rohr 4 hin gerichtete Kammer 12 auf und in der Kammer 12 ist ein Dichtelement 18 angeordnet. Dabei die Presshülse 10 geeignet, zusammen mit dem Dichtelement 18 das zu verbindende Rohr 4 von außen abzudichten.

Des Weiteren ist auch hier ein Zusatzring 20 in der Presshülse 10 aufgenommen und ist in axialer Richtung verschiebbar angeordnet. Dabei kann der Zusatzring 20 zwischen einer proximalen Position (in Fig. 12 und 13 rechts) und einer distalen Position (in Fig. 12 und 13 links) verschiebbar. Der Zusatzring 20 und die Presshülse 10 sind so dimensioniert, dass der Zusatzring 20 zumindest in der distalen Position aus dem distalen Ende der Presshülse 10 teilweise herausragt.

Der Zusatzring 20 weist Anschlagelemente 24 auf, die in Ausnehmungen 40 eingreifen, die in der Wandung der Presshülse 10 ausgebildet sind. Die Ausnehmungen 40 verlaufen in axialer Richtung, so dass der Zusatzring 20 zwischen einer in den Fig. 12 uns 13 rechts dargestellten distalen Position und einer in den Fig. 12 uns 13 links dargestellten proximalen Position bewegbar ist.

In der rechts dargestellten proximalen Position ragt der Zusatzring 20 nicht aus der Presshülse 10 hinaus, während der Zusatzring 20 in der links dargestellten distalen Position sichtbar nach außen in axialer Richtung hervorsteht. In der distalen Position wird dem Nutzer des Fittings 2 also signalisiert, dass das Rohr 4 nicht in der richtigen Position in der Presshülse 10 bzw. im Fitting 2 angeordnet ist.

Während eines Einschiebens des Rohres 4 in das Fitting 2 gelangen die äußere Oberfläche des Rohres 4 und die innere Oberfläche des Zusatzrings 20 in mechanischen Kontakt miteinander, so dass aufgrund von Haftreibung der Zusatzring 20 durch eine Bewegung des Rohres 4 mitbewegt wird.

Der Abstand zwischen der proximalen Position und der distalen Position des Zusatzrings ist geringer als der Abstand zwischen dem Anschlagelement 8 und dem Dichtelement 18. Das entspricht der Dimensionierung des Fittings 2 nach Fig. 1 bis 4.

Weitere Merkmale und Eigenschaften der Ausführungsform nach den Fig. 12 und 13 ergeben sich auch aus der Diskussion des ersten Ausführungsbeispiels gemäß der Fig. 1 bis 4.

## Patentansprüche

1. Fitting zum Verbinden mit einem Rohr (4),
- mit einem Grundkörper (6),
- mit einem in dem Grundkörper (6) umfangseitig ausgebildeten und nach innen vorstehenden Anschlagelement (8),
- mit einer mit dem Grundkörper (6) verbundenen Presshülse (10) und
- mit einem Dichtelement (18),
- wobei die Presshülse (10) geeignet ist, zusammen mit dem Dichtelement (18) das zu verbindende Rohr (4) abzudichten,
**dadurch gekennzeichnet,**
- **dass** ein Zusatzring (20) in der Presshülse (10) in axialer Richtung verschiebbar aufgenommen ist,
- **dass** der Zusatzring (20) zwischen einer proximalen Position und einer distalen Position verschiebbar ist und
- **dass** der Zusatzring (20) zumindest in der distalen Position aus dem distalen Ende der Presshülse (10) teilweise herausragt.

2. Fitting nach Anspruch 1,
**dadurch gekennzeichnet,**
- **dass** der Zusatzring (20) in der proximalen Position vollständig von dem distalen Ende der Presshülse (10) aufgenommen ist oder zu einem Teil herausragt.

3. Fitting nach Anspruch 1 oder 2,
**dadurch gekennzeichnet,**
- **dass** der Zusatzring (20) mindestens eine Markierung zur Positionsanzeige relativ zur Presshülse (10) aufweist.

4. Fitting nach einem der Ansprüche 1 bis 3,
**dadurch gekennzeichnet,**
- **dass** der Zusatzring (20) mindestens einen radial nach innen vorstehenden Haltevorsprung (22) zur Anlage an einem einzuschiebenden Rohr aufweist.

5. Fitting nach einem der Ansprüche 1 bis 4,
**dadurch gekennzeichnet,**
- **dass** der Zusatzring (20) radial nach außen oder in azimutaler Richtung vorstehende Anschlagelemente (24) aufweist

6. Fitting nach einem der Ansprüche 1 bis 5,
**dadurch gekennzeichnet,**
- **dass** die Presshülse (10) eine nach innen zum aufzunehmenden Rohr (4) hin gerichtete Kammer (12) aufweist und
- **dass** das Dichtelement (18) in der Kammer (12) angeordnet ist.

7. Fitting nach Anspruch 6,
**dadurch gekennzeichnet,**
- **dass** ein Klemmring (14) in der Kammer (12) angeordnet ist,
- **dass** der Zusatzring (20) in dem Klemmring (14) in axialer Richtung verschiebbar aufgenommen ist und
- **dass** der Klemmring (14) umfangseitig verteilt angeordnete und axial verlaufende Ausnehmungen (26) zur verschiebbaren Aufnahme der Anschlagelemente (24) aufweist.

8. Fitting nach Anspruch 7,
**dadurch gekennzeichnet,**
- **dass** die Anschlagelemente (24) an sich axial erstreckenden Laschen (28) ausgebildet sind und
- **dass** die Laschen (28) mit einem Ring (30) verbunden sind.

9. Fitting nach einem der Ansprüche 1 bis 8,
**dadurch gekennzeichnet,**
- **dass** der Abstand (dₐ) zwischen der proximalen Position und der distalen Position größer als der axiale Abstand (d_{b}) zwischen dem Anschlagelement (8) und dem Dichtelement (18) ist.

10. Fitting nach einem der Ansprüche 1 bis 9,
**dadurch gekennzeichnet,**
- **dass** ein in der Kammer angeordnetes und zumindest teilweise entgegen der Auszugsrichtung des einzuschiebenden Rohres (4) ausgerichtetes Fixierelement vorgesehen ist.

11. System aus einem Klemmring (14) für ein Fitting für ein Rohr und aus einem Zusatzring (20),
- wobei der Klemmring (14) umfangseitig verteilt angeordnete und axial verlaufende Ausnehmungen (26) zur verschiebbaren Aufnahme der Anschlagelemente (24) aufweist.
- wobei der Zusatzring (20) radial nach außen vorstehende Anschlagelemente (24) aufweist,
- wobei der Zusatzring (20) in dem Klemmring (14) in axialer Richtung verschiebbar aufgenommen ist,
- wobei der Zusatzring (20) zwischen einer proximalen Position und einer distalen Position verschiebbar ist und
- wobei der Zusatzring (20) zumindest in der distalen Position aus dem distalen Ende der Presshülse (10) teilweise herausragt.

12. System nach Anspruch 11,
**dadurch gekennzeichnet,**
- **dass** die Anschlagelemente (24) an sich axial erstreckenden Laschen (28) ausgebildet sind und
- **dass** die Laschen (28) mit einem Ring (30) verbunden sind.

13. System nach Anspruch 11 oder 12,
**dadurch gekennzeichnet,**
- **dass** der Zusatzring (20) mindestens eine Markierung zur Positionsanzeige relativ zu einer Presshülse des Fitting aufweist.

14. System nach einem der Ansprüche 11 bis 13,
**dadurch gekennzeichnet,**
- **dass** der Zusatzring (20) mindestens einen radial nach innen vorstehenden Haltevorsprung (22) zur Anlage an einem einzuschiebenden Rohr aufweist.
